# EUROPÄISCHE PATENTSCHRIFT

(11) **EP 2 853 766 B1**
(45) Veröffentlichungstag und Bekanntmachung des Hinweises auf die Patenterteilung: **18.12.2019**
(21) Anmeldenummer: 14184356.5
(22) Anmeldetag: 11.09.2014
(51) Int. Cl.: F16D 65/18, F16D 65/56

(54) **Auf einer Antriebsspindel geführte Kugelrampenkupplung**
Ball ramp clutch on a drive spindle
Couplage de rampes sphériques guidées sur un arbre de commande

(30) Priorität: 26.09.2013 DE 102013110638
(43) Veröffentlichungstag der Anmeldung: 01.04.2015
(73) Patentinhaber: KNORR-BREMSE Systeme für Nutzfahrzeuge GmbH, 80809 München (DE)
(72) Erfinder: Hacklberger, Michael, 94127 Neuburg am Inn (DE); Krenn, Daniel, 94034 Passau (DE)

(56) Entgegenhaltungen:
- EP-A1- 2 530 350
- CH-A- 372 509
- DE-U- 7 016 959
- US-A- 5 038 895

## Beschreibung

Die Erfindung betrifft eine auf einer Antriebsspindel, insbesondere einer Nachstellvorrichtung einer Scheibenbremse federbelastet geführte Kugelrampenkupplung.

Eine derartige Kugelrampenkupplung ist aus der DE 10 2004 037 771 A1 bekannt. Dabei ist diese Kugelrampenkupplung Bestandteil einer Nachstellvorrichtung, mit der eine verschleißbedingte Lüftspieländerung ausgeglichen wird.

Bei der bekannten Nachstellvorrichtung ist im Innern einer Gewindehülse angeordnet, die als Bremsstempel fungiert und die in einer Brücke der Scheibenbremse verdrehbar gehalten ist.

Über ein Antriebselement, beispielsweise über eine Schaltgabel, wird die Nachstellvorrichtung von einem Bremshebel angetrieben, wobei bei Überschreiten eines vorbestimmten Drehmoments die Kugelrampenkupplung als Überlastschutz in Funktion tritt, so dass eine weitere Verdrehung der Gewindehülse nicht erfolgt.

Die Kugelrampenkupplung weist zwei Rampenscheiben auf, von der eine dem Bremsbelag zugewandte verdrehsicher mit einer in das Gewinderohr formschlüssig eingreifenden Federhülse verbunden ist, während die andere Rampenscheibe an der Schaltgabel angreift oder selbst die Schaltgabel bildet.

Die einander zugewandten Seiten der Rampenscheiben sind jeweils mit über den Umfang verteilten Kalotten versehen, die in Normalstellung der Nachstellvorrichtung, also in eingekuppelter Stellung zum Verdrehen des Gewinderohres deckungsgleich positioniert sind. In Umfangsrichtung schließt sich an jede Kalotte eine ansteigende Rampe an, wobei die Rampen der sich gegenüberliegenden Rampenscheiben gegensinnig ausgerichtet sind.

In der genannten Normalstellung der Nachstellvorrichtung liegt in den sich gegenüberliegenden jeweiligen Kalotten eine Kugel ein, wobei der Durchmesser der Kugeln sowie die Tiefe der Kalotten so bemessen ist, dass sich zwischen den beiden Rampenscheiben ein Spalt ergibt.

Im Funktionsfall, also bei Überschreiten des genannten vorbestimmten Drehmoments, rollen die Kugeln aufgrund einer Relativverdrehung der beiden Rampenscheiben zueinander die Rampen aufwärts, unter axialer Aufspreizung der beiden Rampenscheiben, wobei die dem Bremsbelag zugewandte Rampenscheibe zusammen mit der Federhülse gegen den Druck einer Feder axial verschoben wird.

Allerdings ergeben sich hierbei insofern Probleme, als die Kugeln bei Ihrer Wanderung entlang der Rampen nicht zwangsweise lagegenau positioniert sind.

Dies kann zu einem Lösen der Kugeln aus der Kugelrampenkupplung führen bzw. einem Einspringen in die nächste Kalotte, so dass die Funktion der Nachstellvorrichtung nicht mehr gewährleistet ist.

Die mangelhafte Führung der Kugeln führt überdies zu einer Geräuschbildung, die als störend empfunden wird.

Aus der DE 10 2009 052 189 A1 ist zwar bereits die Verwendung eines die Kugeln aufnehmenden Käfigs bei Wälzlager-Rampeneinrichtungen bekannt, jedoch ergibt sich auch hier das Problem einer unzuverlässigen Halterung der Kugeln, die deren Ausspringen bei einer Verdrehung der Rampenscheiben zueinander begünstigt.

Da die Dicke des scheibenförmigen Käfigs durch den zwischen den beiden Rampenscheiben in Nichtfunktionsstellung, also wenn die Kugeln in dem jeweiligen Kalotten einliegen, gebildeten Spalt bestimmt ist, ist keine ausreichende Anlagefläche für die Kugeln gegeben.

Für den Einsatz in einer Antriebsspindel ist dieser Käfig daher gänzlich ungeeignet.

Dies ergibt sich auch aus dem dieser Druckschrift zu entnehmenden Vorschlag, den Käfig aus einem Kunststoff herzustellen. Bei der betriebsbedingten Häufigkeit der Betätigung der Kugelrampenkupplung bietet der Käfig aus Kunststoff keine ausreichende Festigkeit, um die für ein solches Bauteil gewünschte Standzeit zu gewährleisten.

Eine Kugelrampenkupplung für ein Feststellbremssystem einer Scheibenbremse ist in der US 5 038 895 A offenbart. Dabei weist diese Kugelrampenkupplung zwei relativ zueinander verdrehbare Rampenscheiben auf mit auf ihren einander zugewandten Seiten über den Umfang verteilten Kalotten, in denen Kugeln einliegen. Dabei weist jede Kalotte eine in Umfangsrichtung der Rampenscheibe ansteigende Rampe auf, wobei die Rampen der sich gegenüberliegenden Rampenscheiben gegensinnig ausgebildet sind.

Der Erfindung liegt die Aufgabe zugrunde, eine Kugelrampenkupplung der gattungsgemäßen Art so weiterzuentwickeln, dass ihre Funktionssicherheit verbessert und ihre Standzeit erhöht wird.

Diese Aufgabe wird durch eine Kugelrampenkupplung mit den Merkmalen des Anspruchs 1 gelöst.

Durch die konstruktive Ausbildung nach Anspruch 1 wird auf sehr einfache Art erreicht, dass die Kugeln in jeder Position sicher gehalten sind. Dadurch wird eine gleichmäßige Abrollbewegung bei der Aktivierung der Kugelrampenkupplung gewährleistet.

Damit wird zuverlässig verhindert, dass die Kugeln, wie zum Stand der Technik beschrieben, aus der Kugelrampenkupplung herausfallen können. Dies führt zu einer wesentlichen Verbesserung der Funktionssicherheit der Nachstellvorrichtung insgesamt, aber auch zu einer Erhöhung der Standzeit, da die sich beim Stand der Technik ergebenden diesbezüglichen Reparaturarbeiten gänzlich entfallen können.

Die verbesserte Funktionssicherheit schließt auch ein Zurückbringen aller Kugeln in ihre Ausgangsposition ein, wenn die Entkupplung aufgehoben und die beiden Rampenscheiben wiederum in einen Kupplungszustand gebracht werden.

Auch die beschriebene Geräuschentwicklung durch eine unsaubere Führung der Kugeln ist nunmehr ausgeschlossen, so dass die Nachstellvorrichtung sowohl hinsichtlich ihrer Betriebssicherheit wie auch der an sie gestellten Funktionsansprüche in optimaler Weise gerecht wird.

Nach der Erfindung besteht der Käfig, in dem die Kugeln gehalten sind, aus einer Ringscheibe mit schalenförmigen Aufnahmen für die Kugeln, wobei diese Aufnahmen so gestaltet sind, dass die Kugeln in Umfangsrichtung der Ringscheibe mit geringem Spiel einliegen. In axialer Richtung der Ringscheibe sind die Aufnahmen so ausgelegt, dass die Kugeln sicher gehalten werden, wobei sichergestellt ist, dass der Käfig in axialer Richtung mittig zur Kugel gehalten wird.

In radialer Richtung ist ebenfalls ein geringes Spiel zwischen der Kugel und der Aufnahme vorzusehen, so dass die Kugel in jedem Fall frei rollen kann.

Die den beiden gegenüberliegenden Seiten der Rampenscheiben zugeordneten höckerförmigen Erhebungen des Käfigs sind bevorzugt als Freiformflächen entsprechend der Rampengeometrie der Rampenscheiben ausgeführt, wodurch ein ausreichendes Material für die Kugelführung zur Verfügung steht.

Die Erfindung macht sich hierbei den im Kupplungszustand zur Verfügung stehenden Raum der zugeordneten Rampe zunutze, der Platz für die Erhebung bietet und damit eine wesentlich größere Anlagefläche für die Kugel.

Selbstverständlich sind, um einen Freilauf der Kugeln bzw. der Rampenscheiben zu gewährleisten, die beidseitig der Radialflächen des Käfigs vorstehenden Erhebungen einer Aufnahme in ihrer Gesamthöhe kleiner als der Durchmesser der Kugel.

Gemäß Anspruch 2 ist der Käfig aus einem Blechteil, vorzugsweise gestanzt, hergestellt, das mit einem geeigneten Kunststoff umspritzt ist.

Das Blechteil, das einen Kern bildet, gewährleistet die notwendige Festigkeit über die Lebensdauer des Käfigs, insbesondere im Bereich bauartbedingter geringer Materialanhäufungen.

Um die Kunststoffschicht sicher mit dem Blechteil zu verbinden, können Formschlussmittel vorgesehen sein, beispielsweise in Form von Bohrungen im Blechteil, die von dem Kunststoff durchdrungen sind. Denkbar ist auch die Oberfläche des Blechteils haftungsbegünstigt zu gestalten, mit Hinterschneidungen oder Aufrauungen, beispielsweise durch Kugelstrahlen oder dergleichen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Halbschnitt einer Nachstellvorrichtung für eine Scheibenbremse nach dem Stand der Technik
- Figuren 2 und 3: einen Ausschnitt der Nachstellvorrichtung entsprechend der Kennzeichnung A in Figur 1, in unterschiedlichen Funktionsstellungen
- Figur 4: eine Einzelheit der Erfindung in einer perspektivischen Ansicht
- Figur 5: die Einzelheit in einer geschnittenen Seitenansicht.

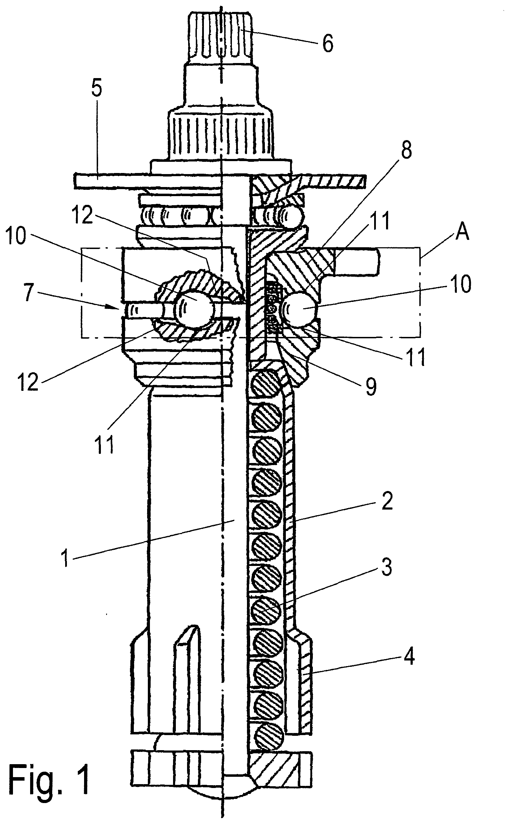

In der Figur 1 ist eine Nachstelleinrichtung einer Scheibenbremse für ein Nutzfahrzeug dargestellt, deren Funktion in der DE 10 2004 037 771 A1 ausführlich beschrieben ist und auf die insoweit Bezug genommen wird.

Dabei weist die Nachstellvorrichtung eine Antriebsspindel 1 auf, an der an einem Ende eine Verzahnung 6 vorgesehen ist, zum Angriff eines Werkzeuges, um die Antriebsspindel 1 bei einem Bremsbelagwechsel zurückzudrehen.

Auf der Antriebsspindel 1 ist eine Schraubenfeder 3 geführt, die in einer Federhülse 2 gehalten ist.

Die Nachstellvorrichtung insgesamt ist mittels einer Lagerplatte 5 an einem Bremssattel der Scheibenbremse festgelegt.

Zur Nachstellung einer einen Bremsstempel bildenden Gewindehülse weist die Federhülse 2 an ihrem der Verzahnung 6 abgewandten Endbereich Mitnehmerstege 4 auf, die formschlüssig in die Gewindehülse eingreifen.

Auf der Antriebswelle 1 ist weiterhin eine Kugelrampenkupplung 7 geführt, mit zwei Rampenscheiben 8, 9, die jeweils auf ihren einander zugewandten Seiten mit Kalotten 11 versehen sind, die über den Umfang verteilt sind und in denen jeweils eine Kugel 10 einliegt.

An jede Kalotte 11 schließt sich eine in Umfangsrichtung ansteigende Rampe 12 an, wobei die Rampen 12 der sich gegenüberliegenden Rampenscheiben 8, 9 gegensinnig ausgerichtet sind.

Zur Nachstellung, d.h., zum Ausgleich einer verschleißbedingten Lüftspieländerung, wird die Federhülse 2 über die Kugelrampenkupplung 7 verdreht, wozu ein Bremshebel in die als Schaltgabel ausgebildete Rampenscheibe 8 eingreift.

Bei Erreichen eines vorbestimmten Drehmoments wird die mit dem Bremshebel korrespondierende Rampenscheibe 8 weiter verdreht, während die gegenüberliegende Rampenscheibe 9 in ihrer Position verharrt. Die Kugeln 10 steigen dabei über die Rampen 12 auf unter axialer Aufspreizung bzw. axialer Lageveränderung der beiden Rampenscheiben 8, 9 zueinander, wodurch der Formschluss zwischen den beiden Rampenscheiben 8, 9 aufgehoben ist.

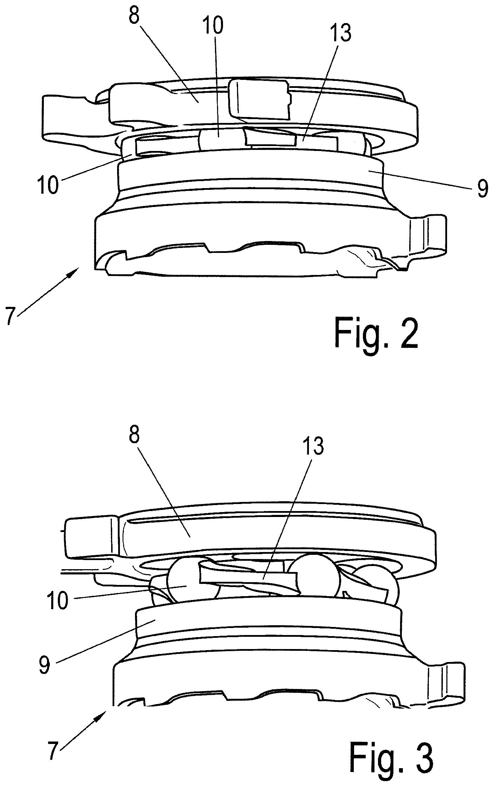

Gemäß der Erfindung ist zwischen den Rampenscheiben 8, 9 ein die Kugeln 10 aufnehmender scheibenförmiger Käfig 13 angeordnet, entsprechend der Abbildung in den Figuren 2 und 3. Während die Figur 2 eine sozusagen Startposition wiedergibt, in der der Formschluss zwischen den beiden Rampenscheiben 8 und 9 durch die Kugeln hergestellt ist, gibt die Figur 3 eine Endposition wieder, in der die Kugeln 10 über die Rampen 12 ansteigend außer formschlüssigen Eingriff gebracht sind.

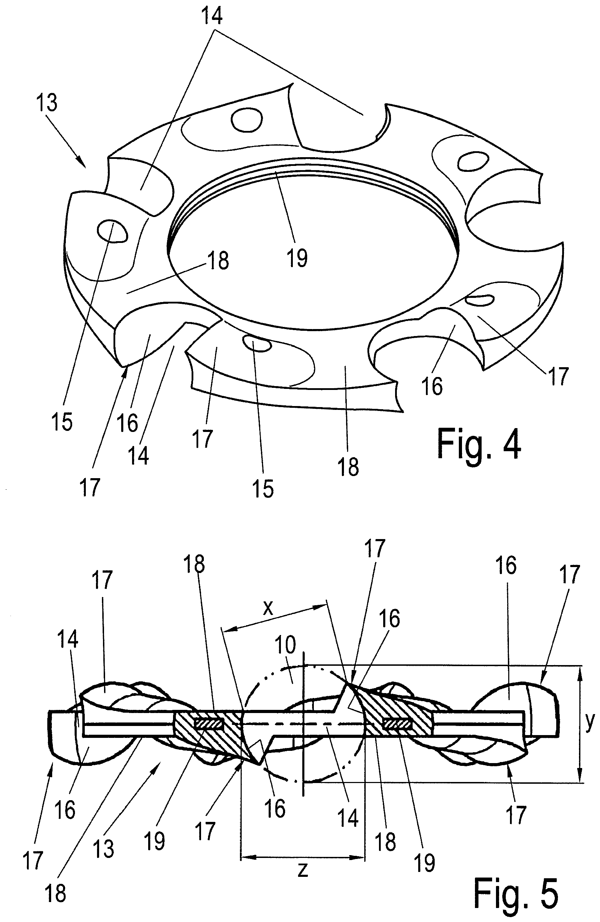

In der Figur 4 ist der Käfig 13 als Einzelheit erkennbar. Umfänglich verteilt sind zum Außenrand hin offene Aufnahmen 14 vorgesehen, die, wie sich auch aus der Figur 5 ergibt, taschenartig ausgebildet sind mit Anlageflächen 16 für die Kugeln 10.

Es ist zu erkennen, dass ein Kern 19 aus einem Blechteil außenseitig von Kunststoff ummantelt ist, wobei kleine Bohrungen 15 zur Fixierung des Blechteiles im Spritzgusswerkzeug gedacht sind, die allerdings auch als Auswerfer genutzt werden können.

Jede der sich in Umfangsrichtung gegenüberliegenden Anlageflächen 16 jeder Aufnahme 14 steht einseitig über eine der beiden Radialflächen 18 des Käfigs 13 vor, wobei die Anlageflächen 16 jeweils in einer angeformten höckerförmigen Erhebung 17 ausgebildet sind.

Jede Erhebung 17 einer Aufnahme 14 ist einer der beiden sich gegenüberliegenden Rampenscheiben 8, 9 zugeordnet, d.h., die Erhebungen 17 und damit die eingeformten Anlageflächen 16 erstrecken sich gegensinnig in axialer Richtung, bezogen auf die Achse des Käfigs 13.

Die Erhebungen 17 sind als Freiformflächen ausgebildet entsprechend der Flächengeometrie der zugeordneten Rampen der benachbarten Rampenscheiben 8, 9.

Im Anlagebereich 16 mit den Kugeln 10 sind die Freiformflächen im Abmaß z (Figur 5) so ausgelegt, dass die Kugeln 10, bezogen auf die Antriebsspindel 1, in radialer Richtung mit geringem Spiel einliegen.

In axialer Richtung sind die Anlagen 16 so geführt, dass sich ein Schnappmaß x ergibt, das kleiner ist als der Durchmesser y der Kugel 10. Dadurch wird überdies sichergestellt, dass der Käfig 13 in seiner Höhenlage in axialer Richtung mittig zur Kugel 10 gehalten bleibt.

## Patentansprüche

1. Kugelrampenkupplung, die auf einer Antriebsspindel (1) einer Nachstellvorrichtung einer Scheibenbremse federbelastet geführt ist, mit zwei relativ zueinander verdrehbaren Rampenscheiben (8, 9), die auf ihren einander zugewandten Seiten über den Umfang verteilt Kalotten (11) aufweisen, in denen Kugeln (10) einliegen, wobei jede Kalotte (11) eine in Umfangsrichtung der Rampenscheibe (8, 9) ansteigende Rampe (12) aufweist und die Rampen (12) der sich gegenüberliegenden Rampenscheiben (8, 9) gegensinnig ausgebildet sind, wobei zwischen den Rampenscheiben (8, 9) ein die Kugeln (10) aufnehmender scheibenförmiger Käfig (13) angeordnet ist, mit radial offenen Aufnahmen (14), in denen jeweils eine Kugel (10) gehalten ist und die an die Kontur der Kugel (10) angepasste Anlageflächen (16) aufweisen, **dadurch gekennzeichnet, dass** sich umfänglich gegenüberliegende Anlageflächen (16) einer Aufnahme (14) zumindest einseitig gegenüber wenigstens einer der beiden Radialflächen (18) des Käfigs (13) vorstehen.

2. Kugelrampenkupplung nach Anspruch 1, **dadurch gekennzeichnet, dass** zwischen den Rampenscheiben (8, 9) ein die Kugeln (10) aufnehmender scheibenförmiger Käfig (13) angeordnet ist, der einen metallischen Kern (19) aufweist, der von einem Kunststoff umspritzt ist.

3. Kugelrampenkupplung nach Anspruch 2, **dadurch gekennzeichnet, dass** der Kunststoff form- und/oder stoffschlüssig im Kern (19) gehalten ist.

4. Kugelrampenkupplung nach einem der vorhergehenden Ansprüche, **dadurch gekennzeichnet, dass** der Kern (19) Bohrungen aufweist, die von dem Kunststoff durchtreten sind oder auf seinen Kontaktseiten mit dem Kunststoff mit einem Haftvermittler versehen ist oder eine strukturierte Oberfläche, insbesondere aufgeraut, aufweist.

5. Kugelrampenkupplung nach einem der vorhergehenden Ansprüche, **dadurch gekennzeichnet, dass** der Kern (19) als Blechformteil ausgebildet ist.

6. Kugelrampenkupplung nach einem der vorhergehenden Ansprüche, **dadurch gekennzeichnet, dass** jeder Rampenscheibe (8, 9) eine der einseitig vorstehenden Anlageflächen (16) einer Aufnahme (14) zugewandt ist.

7. Kugelrampenkupplung nach einem der vorhergehenden Ansprüche, **dadurch gekennzeichnet, dass** jede vorstehende Anlagefläche (16) in einer angeformten höckerförmigen Erhebung (17) ausgebildet ist.

8. Kugelrampenkupplung nach einem der vorhergehenden Ansprüche, **dadurch gekennzeichnet, dass** jede Erhebung (17) in ihrer Flächengeometrie der Flächengeometrie der zugeordneten Rampe der benachbarten Rampenscheibe (8, 9) entspricht.

9. Kugelrampenkupplung nach einem der vorhergehenden Ansprüche, **dadurch gekennzeichnet, dass** die Aufnahmen (14) zum Außenrand des Käfigs (13) hin offen sind.

10. Kugelrampenkupplung nach einem der vorhergehenden Ansprüche, **dadurch gekennzeichnet, dass** der Käfig (13) als Ringscheibe ausgebildet ist, wobei ein Schnappmaß (x) der jeweiligen Aufnahme (14) kleiner ist als der Durchmesser der Kugel (10).

11. Kugelrampenkupplung nach einem der vorhergehenden Ansprüche, **dadurch gekennzeichnet, dass** die Aufnahmen (14) taschenartig ausgebildet sind.

12. Kugelrampenkupplung nach einem der vorhergehenden Ansprüche, **dadurch gekennzeichnet, dass** die Kugeln (10) mit geringem Spiel in den Aufnahmen (14) einliegen.

## Claims

1. Ball ramp clutch, which is guided in a spring-loaded manner on a drive spindle (1) of a readjustment device of a disc brake, with two ramp discs (8, 9) that can rotate relative to one another, which have, distributed around the circumference on their sides facing toward one another, spherical cups (11) in which balls (10) are held, wherein each cup (11) has a ramp (12) rising in the circumferential direction of the ramp disc (8, 9) and the ramps (12) of the ramp discs (8, 9) opposite one another extend in opposite directions, wherein between the ramp discs (8, 9) a disc-shaped cage (13) that holds the balls (10) is arranged, with radially open recesses (14) in each of which a ball (10) is held, and which have contact surfaces (16) adapted to the contour of the ball (10),
**characterised in that** circumferentially opposite contact surfaces (16) of a recess (16) project on at least one side relative to at least one of the two radial surfaces (18) of the cage (13).

2. Ball ramp clutch according to Claim 1, **characterised in that** between the ramp discs (8, 9) there is arranged a disc-shaped cage (13) which holds the balls (10), which has a metallic core (19) with a plastic injection-moulded around it.

3. Ball ramp clutch according to Claim 2, **characterised in that** the plastic is held in the core (19) by friction and/or in a form-enclosed manner.

4. Ball ramp clutch according to any of the preceding claims, **characterised in that** the core (19) has holes through which the plastic passes or is provided with an adhesion promoter on its contact surfaces with the plastic, or has a textured surface, in particular a roughened surface.

5. Ball ramp clutch according to any of the preceding claims, **characterised in that** the core (19) is in the form of a shaped sheet component.

6. Ball ramp clutch according to any of the preceding claims, **characterised in that** one of the contact surfaces (16) of a recess (14) that projects on one side faces towards each ramp disc (8, 9).

7. Ball ramp clutch according to any of the preceding claims, **characterised in that** each projecting contact surface (16) is formed in an attached hump-shaped elevation (17).

8. Ball ramp clutch according to any of the preceding claims, **characterised in that** in its surface geometry each elevation corresponds with the surface geometry of the associated ramp of the adjacent ramp disc (8, 9).

9. Ball ramp clutch according to any of the preceding claims, **characterised in that** the recesses (14) are open towards the outer edge of the cage (13).

10. Ball ramp clutch according to any of the preceding claims, **characterised in that** the cage (13) is in the form of an annular disc, and the snap-on size of each recess (14) is smaller than the diameter of the ball (10).

11. Ball ramp clutch according to any of the preceding claims, **characterised in that** the recesses (14) are of pocket-like form.

12. Ball ramp cage according to any of the preceding claims, **characterised in that** the balls (10) are held in the recesses (14) with a small amount of play.

## Revendications

1. Embrayage à rampe à billes, qui est guidé en étant soumis à l'action d'un ressort sur une broche (1) d'entraînement d'un dispositif de rattrapage de jeu d'un frein à disque, comprenant deux ronds (8, 9) de rampe, pouvant tourner l'un par rapport à l'autre, qui ont, sur leur face tournée l'une vers l'autre, des calottes (11), qui sont réparties sur le pourtour et dans lesquelles sont insérées des billes (10), chaque calotte (11) ayant, dans la direction du pourtour des ronds (8, 9) de rampe, des rampes (12) ascendantes et les rampes (12) des ronds (8, 9) de rampe opposés étant de sens opposé, dans lequel, entre les ronds (8, 9) de rampe, est disposée une cage (13) en forme de rond, recevant les billes (10), en ayant des logements (14) ouverts radialement, dans lesquels, respectivement, une bille (10) est maintenue et qui ont des surfaces (16) de contact adaptées au contour de la bille (10), **caractérisé en ce que** des surfaces (16) de contact opposées sur le pourtour d'un logement (14) font saillie, au moins d'un côté, d'au moins l'une des deux surfaces (18) radiales de la cage (13).

2. Embrayage à rampe à billes suivant la revendication 1, **caractérisé en ce qu'**entre les ronds (8, 9) de rampe, est disposée une cage (13) en forme de rond recevant les billes (10), qui a un noyau (19) métallique recouvert par extrusion d'une matière plastique.

3. Embrayage à rampe à billes suivant la revendication 2, **caractérisé en ce que** la matière plastique est retenue dans le noyau (19) par complémentarité de forme et/ou coopération de matière.

4. Embrayage à rampe à billes suivant l'une des revendications précédentes, **caractérisé en ce que** le noyau (19) a des trous, qui sont traversés par la matière plastique ou est pourvu, sur ses côtés de contact avec la matière plastique, d'un agent adhésif ou a une surface structurée, notamment rugueuse.

5. Embrayage à rampe à billes suivant l'une des revendications précédentes, **caractérisé en ce que** le noyau (19) est constitué sous la forme d'une pièce en tôle.

6. Embrayage à rampe à billes suivant l'une des revendications précédentes, **caractérisé en ce que**, vers chaque rond (8, 9) de rampe, est tournée l'une des surfaces (16) de contact en saillie d'un côté d'un logement (14).

7. Embrayage à rampe à billes suivant l'une des revendications précédentes, **caractérisé en ce que** chaque surface (16) de contact en saillie est constituée dans une surélévation (17) en forme de bosse venue de matière.

8. Embrayage à rampe à billes suivant l'une des revendications précédentes, **caractérisé en ce que** chaque surélévation (17) correspond dans sa géométrie de surface à la géométrie de surface de la rampe associée du rond (8, 9) de rampe voisin.

9. Embrayage à rampe à billes suivant l'une des revendications précédentes, **caractérisé en ce que** les logements (14) sont ouverts vers le bord extérieur de la cage (13).

10. Embrayage à rampe à billes suivant l'une des revendications précédentes, **caractérisé en ce que** la cage (13) est constituée sous la forme d'un cerceau, une dimension (x) d'encliquetage du logement (14) respectif étant plus petite que le diamètre des billes (10).

11. Embrayage à rampe à billes suivant l'une des revendications précédentes, **caractérisé en ce que** les logements (14) sont constitués en poche.

12. Embrayage à rampe à billes suivant l'une des revendications précédentes, **caractérisé en ce que** les billes (10) sont logées avec un jeu petit dans les logements (14).
